# EUROPÄISCHE PATENTSCHRIFT

(11) **EP 1 124 892 B1**
(45) Veröffentlichungstag und Bekanntmachung des Hinweises auf die Patenterteilung: **22.09.2004**
(21) Anmeldenummer: 99950546.4
(22) Anmeldetag: 23.09.1999
(51) Int. Cl.: C08K 5/00, C04B 24/32

(54) **STABILISIERTE, WASSERLÖSLICHE POLYMERPULVER AUF BASIS VON POLYOXYALKYLENGLYKOL-CARBOXYLATEN UND VERFAHREN ZU DEREN HERSTELLUNG**
STABILIZED WATER-SOLUBLE POLYMER POWDERS ON THE BASIS OF POLYOXY ALKYLENE GLYCOL CARBOXYLATES AND METHOD FOR PRODUCING SAME
POUDRES POLYMERES HYDROSOLUBLES ET STABILISEES, A BASE DE CARBOXYLATES DE POLYOXYALKYLENEGLYCOL ET PROCEDES DE PREPARATION DESDITES POUDRES

(30) Priorität: 24.09.1998 DE 19843730
(43) Veröffentlichungstag der Anmeldung: 22.08.2001
(73) Patentinhaber: Degussa Construction Chemicals GmbH, 83308 Trostberg (DE)
(72) Erfinder: ALBRECHT, Gerhard, D-83342 Tacherting (DE); WEICHMANN, Josef, D-84568 Pleiskirchen (DE); WUTZ, Konrad, D-83308 Trostberg (DE); BICHLER, Manfred, D-84549 Engelsberg (DE); KERN, Alfred, D-84558 Kirchweidach (DE)
(74) Vertreter: Weiss, Wolfgang, Dipl.-Chem. Dr.
(86) Internationale Anmeldenummer: PCT/EP1999/007103
(87) Internationale Veröffentlichungsnummer: WO 2000/017263

(56) Entgegenhaltungen:
- DE-A- 4 421 722
- GB-A- 949 992

## Beschreibung

Die vorliegende Erfindung betrifft stabilisierte, d. h. gegen Selbstentzündung und oxidativen Abbau geschützte wasserlösliche Polymerpulver auf der Basis von Polyoxyalkylenglykol-Carboxylaten sowie ein Verfahren zu deren Herstellung.

Wasserlösliche Polymere auf der Basis von Oxyalkylenglykolen und Carbonsäurederivaten haben in der jüngsten Vergangenheit Zugang zu einer Reihe von Anwendungen gefunden. Neben ihrem Einsatz als Dispersionsstabilisator bei der Herstellung wasserlöslicher Copolymere (WO 97/30094) werden sie unter anderem auch als stabilisierendes Agens (Schutzkolloid) bei der Bereitung verbackungsresistenter Dispersionspulver verwendet.

Vorzugsweise und in großen Mengen erfolgt ihr Einsatz jedoch als Fließmittel für hydraulische Bindemittel wie Zement, Kalk sowie calciumsulfatgebundene Baustoffe (EP-A 838 444), als Pigmentdispergiermittel im Bereich Lacke und Farben, als Verarbeitungshilfsmittel für Tone und Porzellanschlicker in den Bereichen Keramik und Feuerfestmaterialien (DE-OS 43 00 239) sowie bei der Erdölgewinnung. Die strukturelle Variationsbreite derartiger Produkte reicht dabei von statistischen, alternierend, blockweise oder kammartig aufgebauten Copolymeren aus einem oxyalkylenglykolhaltigen Strukturbaustein und einem Carbonsäuremonomer (wie Acrylsäure, Methacrylsäure, Maleinsäure(anhydrid), Itaconsäure, Fumarsäure usw.) bis hin zu Pfropfcopolymeren o.g. Carbonsäuremonomere auf Polyoxyalkylenglykolen bzw. deren Derivaten (Ether, Ester). Diese im weiteren als Polyoxyalkylenglykol-Carboxylate bezeichneten Polymere können entweder als freie Säure oder in ihrer Salzform vorliegen.

Der Vorteil derartiger Copolymere zum Beispiel im Bereich Fließmittelanwendungen in der Bauindustrie liegt zum einen in der Möglichkeit, mit äußerst geringen Einsatzmengen eine langanhaltende Verarbeitbarkeit von zementären Baustoffmischungen zu erreichen (Transportbetonindustrie).

Zum anderen kann der Wasseranspruch dieser Mischungen so stark reduziert werden, daß hochfeste Betone herstellbar sind (Fertigteilherstellung). Die Produkte selbst sind frei von toxikologisch bedenklichen Bestandteilen, wie Formaldehyd, wodurch sie sich von herkömmlichen Zementfließmitteln z. B. nach EP-A 214 412 oder DE-PS 16 71 017 unterscheiden. Für eine Reihe von Anwendungen ist es sinnvoll und wünschenswert, die o.g. wasserlöslichen Polymere in Form ihrer wäßrigen Zubereitungen bereitzustellen. Jedoch dann, wenn die Polymere als Additiv in werksseitig vorgefertigten Trockenmischungen eingesetzt werden sollen, müssen die Produkte in fester, möglichst fein verteilbarer Form, also in Pulverform vorliegen.

Neben logistischen und ökonomischen Vorteilen, die Pulver gegenüber Lösungen auszeichnen, liegen die technischen Vorzüge eines Pulvers vor allem in der verbesserten Lagerstabilität und der Frostunempfindlichkeit.

Pulverförmige Polymere auf der Basis von Polyoxyalkylenglykol-Carboxylaten neigen jedoch zur Selbsterwärmung oder gar zur Selbstentzündung, insbesondere bei einer bedingt durch hohe Mahlfeinheiten sehr großen spezifischen Oberfläche des Pulvers bzw. bei großen Lagermengen bspw. im Silo. Diese Tendenz stellt eine hohes Sicherheitsrisiko dar. Hinzu kommt, daß auftretende höhere Temperaturen sowie die Gegenwart von Luftsauerstoff die Wirksamkeit der Produkte bedingt durch thermooxidative Abbauprozesse der Oxyalkylenglykolstruktureinheiten vermindern.

Die aus den Druckschriften US-PS 4 070 304, US-PS 4 444 676, DE-OS 2 557 619 und EP-PS 38 876 bekannten Stabilisatoren bzw. Antioxidantien umfassen sterisch gehinderte Phenole, Bisphenole, Dialkyldiphenylamine, Phenothiazine und substituierte Phosphite bzw. Gemische dieser Substanzklassen.

Die Wirksamkeit der Stabilisatoren hängt zum einen davon ab, welcher Substanzklasse die einzelnen Vertreter angehören, sie wird andererseits jedoch stark durch die Verträglichkeit mit dem zu stabilisierenden Substrat bestimmt.

Der Großteil der bekannten Stabilisatoren aus den o.g. Gruppen sind wasserunlöslich und eignen sich daher hervorragend zur Stabilisierung hydrophober Substrate, wie zum Beispiel von Dispersionspulvern auf der Basis von Vinylacetat, Vinylversatat, Ethylen und 2-Ethylhexylacrylat (EP-A 751 175). Auch zu reinen Substraten aus der Gruppe der Polyoxyalkylenglykole weisen o.g. wasserunlösliche Stabilisatoren - wie in der DE-OS 42 26 288 und DE-OS 43 00 892 beschrieben - eine ausgezeichnete Verträglichkeit auf. Sie werden daher mit Erfolg zur thermooxidativen Stabilisierung dieser Substanzklasse eingesetzt.

Probleme treten jedoch dann auf, wenn das zu stabilisierende Substrat bedingt durch extrem hydrophile Eigenschaften wie im Falle der beschriebenen Polyoxyalkylenglykol-Carboxylate mit hydrophoben Stabilisatoren nicht verträglich ist.

Der vorliegenden Erfindung lag daher die Aufgabe zugrunde, wasserlösliche Polymerpulver auf Basis von Polyoxyalkylenglykol-Carboxylaten zu entwickeln, die unter Verwendung herkömmlicher Stabilisatoren gegen Setbsterhitzung und thermooxidativen Zerfall stabilisiert sind.

Diese Aufgabe wurde erfindungsgemäß dadurch gelöst, daß stabilisierte Polyoxyalkylenglykol-Carboxylat-Pulver bereitgestellt werden, die eine für die Stabilisierung ausreichende Menge, insbesondere 0,01 bis 10 Gew.-% eines Stabilisators, bezogen auf das Gewicht des Polymerpulvers, ausgewählt aus der Gruppe Phenole, Amine, Phosphite, Thioether sowie Thiosäuren enthalten. Die stabilisierten Pulver sind erhältlich, indem man den Stabilisator in flüssiger oder gelöster Form der wäßrigen Polymerlösung vor deren Überführung in die Pulverform zusetzt. Es hat sich hierbei überraschenderweise gezeigt, daß sich die hydrophilen Polyoxyalkylenglykol-Carboxylate auch mit Hilfe von hydrophoben Stabilisatoren in ausgezeichneter Weise stabilisieren lassen, so daß bei Erwärmung einer Probe des Polymerpulvers auf 140°C für 24 h an Luft die Temperatur im Inneren der Probe 200°C nicht überschreitet.

Bei den zu stabilisierenden wasserlöslichen Polymerpulvern auf Basis von Polyoxyalkylenglykol-Carboxylaten handelt es sich um Produkte, die in der Haupt-und/oder Seitenkette Oxyalkylenglykolgruppen und Carboxylgruppen enthalten. Hierbei können die Polymere aus Monomeren auf Basis von ungesättigten Carbonsäure(-Derivaten) und Oxyalkylenglykol-alkenylethern aufgebaut sein.

Desweiteren ist es möglich, daß die Polymere eine ungesättigte Carbonsäure als Hauptkette und über Estergruppen gebundene Polyalkylenoxid-Seitenketten enthalten. Als ungesättigte Carbonsäuren bzw. Carbonsäurederivate eignen sich insbesondere Acrylsäure, Methacrylsäure, Maleinsäureanhydrid, Maleinsäure, Fumarsäure, Itaconsäure sowie Itaconsäureanhydrid. Die Polymere können hierbei linear, kurzkettenverzweigt, langkettenverzweigt oder auch leicht vernetzt sein und in Kammform, Sternform, Hantelform und anderen morphologischen Formen vorliegen.

Es ist im Rahmen der vorliegenden Erfindung auch ohne weiteres möglich, daß die zu stabilisierenden Polymerpulver weitere einfach und/oder mehrfach ungesättigte Monomere auf Vinyl- und/oder Acrylatbasis enthalten, die zum Aufbau des Grundgerüstes oder der Seitenketten notwendig sind.

Beispiele hierfür sind Styrol, α-Methylstyrol, Vinylacetat, Isobuten, Diisobuten, Cyclopentadien, Ethylen, Propylen, Methylacrylat, Methylmethacrylat, Butylacrylat, 2-Ethylhexylacrylat, N-Vinylpyrrolidon, Acrylamid, Methacrylamid, Acrylamidomethylpropansulfonsäure, Styrolsulfonsäure, Methylvinylether, Ethylvinylether, Allylsulfonsäure, Butadien, Acrylnitril und andere.

Beispiele für die erfindungsgemäß stabilisierten Polymere sind kammartig aufgebaute Polymere aus einer Methacrylsäure-Hauptkette und über Estergruppen gebundenen Polyalkylenoxid-Seitenketten, mit Methylpolyethylenglykol (teil-)veresterte Maleinsäureanhydrid/Styrol-Copolymere, Allylpolyethylenglykol/Maleinsäure-Copolymere, Vinylpolyethylenglykol/-Maleinsäuremonoester-Copolymere, Pfropfcopolymere bestehend aus einem Polyethylen- bzw. Polypropylenglykol-Grundgerüst und Maleinsäureanhydrid- bzw. Acrylsäure-Seitenketten, die ihrerseits wiederum verestert bzw. teilverestert sein können, sowie Blockcopolymere aus Methacrylsäure und Ethylenglykol.

Zur Stabilisierung gegen Selbstentzündung sowie gegen den thermooxidativen Abbau der in Pulverform vorliegenden Polymere können Verbindungen auf Basis von Phenolen eingesetzt werden, die sich in folgende Verbindungsklassen einteilen lassen:
1. Alkylierte Monophenole mit einem oder mehreren Alkylresten von 1 bis 18 C-Atomen, wie z. B.
   2,6-Di-tert-butyl-4-methylphenol, 2,6-Di-tert-butylphenol, 2-tert-Butyl-4,6-dimethylphenol,2,6-Di-tert-butyl-4-ethylphenol,2,6-Di-tert-butyl-4-n-butylphenol, 2,6-Di-tert-butyl-4-i-butylphenol, 2,6-Di-cyclcopentyl-4-methylphenol, 2-(β-Methylcyclohexyl)-4,6-dimethylphenol, 2,6-Dioctadecyl-4-methylphenol, 2,4,6-Tri-cyclohexylphenol, 2,6-Di-tert-butyl-4-methoxymethylphenol, o-tert-Butylphenol.
2. Alkylierte Hydrochinone mit einem oder mehreren Alkylresten von 1 bis 18 C-Atomen, wie z. B.
   2,6-Di-tert-butyl-4-methoxyphenol, 2,5-Di-tert-butyl-hydrochinon, 2,5-Di-tert-amyl-hydrochinon, 2,6-Di-phenyl-4-octadecyloxyphenol.
3. Alkyliden-Bisphenole mit einem C₁-C₄ Alkylidenrest, der gegebenenfalls substituiert sein kann, und/oder sterisch gehinderte Mehrkernphenole wie z. B. 2,2'-Methylen-bis-(6-tert-butyl-4-methylphenol), 2,2'-Methylen-bis-(6-tert-butyl-4-ethylphenol), 2,2'-Methylen-bis-(4-methyl-6-(α-methylcyclohexyl)-phenol), 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tertbutylphenol), 2,2'-Ethyliden-bis-(6-tert-butyl-4-oder 5-isobutylphenol), 2,2'-Methylen-bis-(6-α-methylbenzyl)-4-nonylphenol), 2,2'-Methylen-bis-(6-(α,α-dimethylbenzyl)-4-nonylphenol), 4,4'-Methylen-bis-(2,6-di-tert-butylphenol), 4,4'-Methylen-bis-(6-tert-butyl-2-methylphenol), 1, 1 -Bis-(5-tert-butyl-4-hydroxy-2-methylphenyl)-butan, 2,6-Di-(3-tert-butyl-5-methyl-2-hydroxybenzyl)-4-methylphenol, 1,1,3-Tris-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], 3,8-Bis-(3-tert-butyl-4-hydroxy-5-methylphenyl)-dicyclopentadien, Bis-[2-(3'-tert-butyl-2'-hydroxy-5'-methyl-benzyl)-6-tert-butyl-4-methyl-phenyl]-terephthalat, 2,2'-Isobutyliden-bis-(4,6-dimethyl-phenol), 4,4'-Butyliden-bis-(2-tert-butyl-5-methylphenol), 1,1,3-Tris-(2-methyl-4-hydroxy-5-tert-butylphenyl)-butan.
4. Phenolische Benzylverbindungen wie z. B. 1,3,5-Tri-(3,5-di-tert-butyl-4-hydroxybenzyl)-2,4,6-trimethyl-benzol, Bis-(3,5-di-tert-butyl-4-hydroxy-benzyl)-sulfid, 3,5-Di-tert-butyl-4-hydroxybenzylmercaptoessigsäure-isoctylester, Bis-(4-tert-butyl-3-hydroxy-2,6-dimethylbenzyl)dithio-terephthalat, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 3,5-Di-tert-butyl-4-hydrozybenzylphosphonsäure-dioctadecylester, 3,5-Di-tert-butyl-4-hydroxybenzylphosphonsäure-monoethylester-Calciumsalz.
5. Phenol-Thiodiphenylether-Verbindungen wie z. B. 2,2'-Thio-bis-(6-tertbutyl-4-methylphenol), 2,2'-Thio-bis-(4-octylphenol), 4,4'-Thio-bis-(6-tert-butyl-3-methylphenol),4,4'-Thio-bis-(6-tert-butyl-2-methylphenol).
6. Acylaminophenole wie z.B. 4-Hydroxy-laurinsäureanilid, 4-Hydroxystearinsäureanilid, 2,4-Bis-octylmercapto-6-(3,5-di-tert-butyl-4-hydroxyanilino)-s-triazin, N-(3,5-Di-tert-butyl-4-hydroxyphenyl)-carbaminsäure-octylester.
7. Phenolische Ester wie etwa Ester von β-(3,5-Di-tert-butyl-4-hydroxyphenol)-propionsäure oder von β-(5-tert-Butyl-4-hydroxy-3-methylphenyl)-propionsäure mit ein- oder mehrwertigen Alkoholen wie z. B. Methanol, Diethylenglycol, Octadecanol, Triethylenglycol, 1,6-Hexandiol, Pentaerythrit, Neopentylglycol, Tris-hydroxyethylisocyanurat, Thiodiethylenglycol, Di-hydroxyethyl-oxalsäurediamid.
8. Phenolische Amide wie etwa Amide von β-(3,5-Di-tert-butyl-4-hydroxyphenyl)-propionsäure wie z. B. N,N'-Bis-(3,5-di-tert-butyl-4-hydroxyphenylpropionyl)-hexamethylendiamin, N,N-Bis-(3,5-di-tert-butyl-4-hydroxyphenylpropionyl)-trimethylendiamin, N,N'-Bis-(3,5-di-tert-butyl-4-hydroxyphenylpropionyl)hydrazin.

Als Stabilisatoren auf Amin-Basis werden insbesondere sekundäre oder tertiäre Amine mit aliphatischen, araliphatischen, aromatischen, cyclischen Resten oder N-Heterocyclen (wie z. B. ggf substituierte Phenothiazine, Benzothiazine oder Chinoline) verwendet. Beispiele hierfür sind: N,N'-Di-isopropyl-p-phenylendiamin, N,N'-Di-sec.-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methylheptyl)-p-phenylendiamin, N,N'-Dicyclohexyl-p-phenylendiamin, N, N'-Diphenyl-p-phenylendiamin, N,N'-Di-(naphthyl-2-)-p-phenylendiamin, N-Isopropyl-N'-phenyl-p-phenylendiamin, N-(1,3-Dimethylbutyl)-N'-phenyl-p-phenylendiamin, N-(1-Methyl-heptyl)-N'-phenyl-β-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenytendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z. B. p,p'-Di-teri-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxy-phenyl)-amin, 2,6-Di-tert-butyl-4-dimethylamino-methyl-phenol, 2,4-Diaminodiphenylmethan, 4,4'-Diamino-diphenylmethan, N,N,N',N'-Tetramethy)-4,4'-diaminodiphenylmethan, 1,2-Di-(phenylamino)-ethan, 1,2-Di-[2-methyl-phenyl)-amino]-ethan, 1,3-Di-(phenylaminol-propan, (o-Tolyl)-biguanid, Di-[4-(1',3'-dimethylbutyl)-phenyl]amin, tert-octyliertes N-Phenyl-1-naphthylamin, Mischung aus mono- und dialkylierten tert-Butyl-/tert-Octyldiphenylaminen, 2,3-Dihydro-3,3-dimethyl-4H-1,4-benzothiazin, Phenothiazin, n-Allylphenothiazin, styrolisiertes Diphenylamin, polymerisiertes 2,2,4-Trimethyl-1,2-dihydrochinolin.

Aus der Reihe der Phosphite (Ester der phosphorigen Säure) können Verbindungen mit aliphatischen, araliphatischen und/oder aromatischen Resten als Stabilisatoren eingesetzt werden. Beispiele hierfür sind: Trimethylphosphit, Triethylphosphit, Triisobutylphosphit, Triphenylphosphit und Tris[4-nonylphenyl]-phosphit.

Als Thioether haben sich Ester von Thiodiessigsäure oder Thiodipropionsäure wie z. B. Di-lauryl-3,3'-thiodipropionat oder Distearyl-3,3'-thiodipropionat als besonders geeignet erwiesen.

Aus der Reihe der Thiosäuren werden vorzugsweise Dithiocarbaminund/oder Dithiophosphorsäure bzw. deren Salze eingesetzt.

Die Stabilisatoren können sowohl einzeln als auch in Kombination eingesetzt werden. Besonders bevorzugt verwendet werden sterisch gehinderte Phenole und Amine sowie Phenothiazin.

Die erfindungsgemäßen Zugabemengen hängen von der Wirksamkeit des Stabilisators ab und liegen in der Regel zwischen 0,01 und 10 Gew.-% insbesondere zwischen 0,1 und 1 Gew.-% bezogen auf das Polymerpulver, welches vorzugsweise eine Teilchengröße von 10 bis 100 µm aufweist. Gemäß einer bevorzugten Ausführungsform enthalten die erfindungsgemäßen Mischungen aus wasserlöslichem Polymerpulver und Stabilisator zusätzlich noch bis zu 5 Gew.-% einer wasserlöslichen Aminosulfonsäureverbindung, wie Amidosulfonsäure und/oder Taurin, in Form der freien Säure oder als Salz.

Es ist als erfindungswesentlich anzusehen, daß der Stabilisator in flüssiger oder gelöster Form der wäßrigen Polymerlösung vor deren Überführung in die Pulverform zugesetzt wird, weil der thermooxidative Stabilisierungseffekt erst dann wirksam wird.

Zur Emulgierung des Stabilisators in der wäßrigen Polymerlösung wird der Stabilisator entweder in flüssiger oder gelöster Form (bspw. in einem geeigneten organischen Lösemittel) der entsprechenden wäßrigen Polymerlösung zugesetzt, wobei sich eine Mikroemulsion aus Stabilisator und Polymerverbindung bildet und die feinteiligen Öltröpfchen des Stabilisators eine Teilchengröße von < 100 nm aufweisen.

Überraschenderweise gelingt die Bildung dieser Mikroemulsion auch ohne weitere Zusätze in Form von Tensiden oder Schutzkolloiden und auch ohne die Anwendung scherintensiver Dispergiervorgänge.

Um die Mikroemulsion bestehend aus Stabilisator und Polymerverbindung in die Pulverform überzuführen, ist es notwendig, die flüssige Phase bestehend aus Wasser und ggf. organischem Lösemittel zu entfernen, was mit den üblichen Methoden, wie z. B. Sprühtrocknung ohne weiteres erfolgen kann.

Es hat sich hierbei als besonders vorteilhaft erwiesen, daß der pH-Wert der wäßrigen Polymerlösung vor der Überführung in die Pulverform auf einen pH-Wert von 6 bis 10, vorzugsweise 7 bis 9, eingestellt wird. Die wäßrige Polymerlösung weist hierbei vorzugsweise einen Feststoffgehalt von 10 bis 50 Gew.-% auf. Mit Hilfe dieses Emulgierungsschrittes ist es möglich, die wasserlöslichen Polymerpulver auf Basis von Polyoxyalkenylglykol-Carboxylaten auch mit hydrophoben Verbindungen zu stabilisieren, wobei Polymerpulver und Stabilisator durch adsorptive Wechselwirkungen in ein extrem feinteiliges kolloidales System übergeführt werden. Hierbei werden die mit Polyelektrolyt-Molekülen belegten Kolloidteilchen elektrostatisch (Carboxylgruppen) sowie sterisch (Polyoxyalkenylglykolgruppen) derart stabilisiert, daß ein thermodynamisch bevorzugter Zustand erreicht wird.

Die durch die Feinteiligkeit des Stabilisators resultierende hohe Oberfläche führt weiterhin dazu, daß jedes Molekül des zu stabilisierenden Substrates erreicht wird, woraus sich eine ausgezeichnete Effektivität ableitet.

Die erfindungsgemäß gegen Selbstentzündung und oxidativen Abbau geschützten Polymerpulver weisen somit eine unerwartet hohe thermooxidative Stabilität selbst dann noch auf, wenn sie hohen Temperaturen und oxidierenden Einflüssen (Luft, Sauerstoff) ausgesetzt sind.

Die nachfolgenden Beispiele sollen die Erfindung näher erläutern.

### Beispiele

### Beispiel 1

In einem Becherglas wurden 200 g einer 36 Gew.-%igen Lösung eines statistisch aufgebauten als Calciumsalz vorliegenden Copolymerisates aus 75 Molprozent Methacrylsäure und 25 Molprozent eines Esters aus Methacrylsäure und Methylpolyethylenglykol des mittleren Molekulargewichts 1100 g/Mol bei Raumtemperatur vorgelegt. Die Lösung, die einen pH-Wert von 7,2 aufwies, wurde anschließend unter Rühren mit 0,36 g eines Stabilisators basierend auf einem styrolysierten Diphenylamin mit der Handelsbezeichnung ADDITIN RC 7135 versetzt. Es wurde eine stabile Emulsion erhalten, die mit 200 g Wasser verdünnt wurde und in einem Laborsprühtrockner der Firma NIRO-Atomizer in ein Pulver überführt wurde (Eingangstemperatur 180°C, Austrittstemperatur 105°C). Das erhaltene Pulver wurde mit 0,30 g hochdisperser Kieselsäure behandelt, um es in eine rieselfähige Form zu überführen. Nach Absiebung agglomerierter Partikel durch ein 80 µm-Sieb wurde ein weißes Pulver mit einem mittleren Teilchendurchmesser von 28 µm (Luftstrahlsiebanalyse) erhalten.

### Vergleichsbeispiel 1

Beispiel 1 wurde wiederholt, jedoch erfolgte die Sprühtrocknung ohne den Zusatz des Stabilisators ADDITIN RC 7135. Der mittlere Teilchendurchmesser des erhaltenen weißen Pulvers betrug 32 µm.

### Vergleichsbeispiel 2

Das im Vergleichsbeispiel 1 erhaltene Pulver wurde nachträglich mit 0,35 g ADDITIN RC 7135 versetzt und anschließend für 36 Stunden auf dem Walzenstuhl gemischt. Der mittlere Teilchendurchmesser des verbleibenden Pulvers lag bei 25 µm.

Die Charakterisierung der Pulver hinsichtlich ihres Entzündungsverhaltens erfolgte gemäß der "Testkriterien und Testverfahren zur Einstufung von gefährlichen Stoffen der Gefahrgutklassen 4.1, 4.2, 4.3 und 5.1 " (K.O. Storck Verlag, Hamburg):
- Klasse 4.1: Entzündbare feste Stoffe
- Klasse 4.2: Selbstentzündliche Stoffe
- Klasse 4.3: Stoffe, die in Berührung mit Wasser entzündbare Gase bilden
- Klasse 5.1: Entzündend (oxidierend) wirkende Stoffe

Damit eine Einstufung in die Klasse 4.1 erreicht werden kann, muß sichergestellt sein, daß bei einer Langzeiterwärmung einer Pulvermenge von 1 I (Schüttvolumen, entsprechend 600-700 g) in einem würfelförmigen Drahtnetz von 10 cm Kantenlänge (Bowes-Cameron-Korb) über 24 h bei 140°C (Innentemperatur) keine Selbstentzündung eintritt und die Temperatur im Innern der Probe nach 24 h Lagerung 200°C nicht überschreitet. Sind diese Kriterien nicht erfüllt, erfolgt die Einstufung in eine der Klassen 4.2, 4.3 oder 5.1, was den sicherheitstechnischen Aufwand bei der Herstellung, Lagerung, Inverkehrbringung und Handhabung so stark erhöht, daß eine Kommerzialisierbarkeit in Frage gestellt ist.

Zur Durchführung der Tests wird ein Drahtkorb mit Probenbehälter mit dem zu prüfenden Polymerpulver gefüllt. Der Behälter wird mehrmals leicht aufgestoßen und nach dem Absetzen des Pulvers wieder aufgefüllt. Zuletzt wird das überstehende Material abgestreift. Anschließend wird der mit Prüfsubstanz vollständig gefüllte Drahtkorb in einen auf 140° C vorgeheizten Trockenschrank gestellt und im Zentrum des Substanzwürfels ein Thermoelement plaziert. Ein zweites Thermoelement wird in eine Graphitvergleichsprobe, die sich in einem DEWAR-Gefäß befindet, angeordnet. Beide Temperaturen werden über eine Zeit von 24 h kontinuierlich mit Hilfe des Meßwerterfassungssystems SIPCON erfaßt und graphisch ausgewertet.

Während in dem nach Beispiel 1 hergestellten Polymerpulver über die gesamte 24stündige Prüfzeit eine konstante Temperatur von 140°C gemessen wird, überschreitet das Pulver gemäß Vergleichsbeispiel 1 bereits nach 3,7 Stunden die 200°C-Grenze und erhitzt sich innerhalb kurzer Zeit unter thermooxidativer Zersetzung auf 464°C.

Vergleichsbeispiel 2: Überschreitung der 200 °C-Grenze nach 6,8 Stunden
(Tₘₐₓ = 430°C)

Während also das nach dem erfindungsgemäßen Verfahren stabilisierte Polyethercarboxylat in die Klasse 4.1 der Gefahrgutverordnung einzustufen ist, sind Produkte gemäß Vergleichsbeispiele 1 und 2 in die Gruppe der selbstentzündlichen Stoffe (Klasse 4.2) einzuordnen.

### Beispiele 2 bis 10

Zu der im Beispiel 1 beschriebenen 35 Gew.-%igen Polymerlösung wurden jeweils 0,60 Gew.-% (auf den polymeren Feststoff bezogen) der folgenden Stabilisatoren emulgiert (Tabelle 1).

**Tabelle 1**

| **Beispiel** | **Stabilisator** | **maximale Probetemperatur (°C) (24h-Lagerung bei 140°C)** |
|---|---|---|
| 2 | LOWINOX BHT ¹⁾ | 186 |
| 3 | LOWINOX AH25²⁾ | 181 |
| 4 | ADDITIN RC 7115 ³⁾ | 172 |
| 5 | LOWINOX 44 S 36⁴⁾ | 159 |
| 6 | IRGANOX P 1010⁵⁾ | 142 |
| 7 | VULKANOX OCD⁶⁾ | 140 |
| 8 | Phenothiazin | 143 |
| 9 | IRGANOX PS 802⁷⁾ | 154 |
| 10 | HOSTANOX OSP1⁸⁾ | 140 |
| VERGL. 3 | ohne Zusatz | 464 |

| | | |
|---|---|---|
| ¹⁾ 2,6-Di-tert-butyl-4-methyl-phenol (Great Lakes) | | |
| ²⁾ 2,5-Di-tert-amyl-hydrochinon (Great Lakes) | | |
| ³⁾ 2,2'-Methylen-bis-(6-tert-butyl-4-methylphenol) (Rhein Chemie) | | |
| ⁴⁾ 4,4'-Thio-bis-(2-tert-butyl-5-methylphenol) (Great Lakes) | | |
| ⁵⁾ Pentaerythrityl-tetrakis-3-(3',5'-di-tert-butyl-4'-hydroxyphenyl)-propionat (Ciba) | | |
| ⁶⁾ octyliertes Diphenylamin (Bayer) | | |
| ⁷⁾ Di-stearyl-3,3'-thiodipropionat (Ciba) | | |
| ⁸⁾ Tris-[2-tert-butyl-4-(2-methyl-4-hydroxy-5-tert-butyl)-phenylmercapto-5-methylphenyl]-phosphit (Clariant) | | |

Es wird in keinem Fall der erfindungsgemäß stabilisierten Gemische die kritische Temperaturschwelle von 200°C überschritten.

### Beispiele 11 bis 20:

Die in den Beispielen 1 bis 10 eingesetzten Stabilisatoren wurden gemäß dem in Beispiel 1 beschriebenen Verfahren zur Stabilisierung der in den folgenden Beispielen angegebenen Polymere verwendet (Tabelle 2):

**Tabelle 2**

| Beispiel | Polymer ¹⁾ | Stabilisator | Maximale Probetemperatur (°C) 24h-Lagerung bei 140°C) |
|---|---|---|---|
| 11 | A | ADDITIN TC 7135²⁾ | 140 |
| 12 | B | ADDITIN RC 7135²⁾ | 141 |
| 13 | C | ADDItIN RC 7135²⁾ | 140 |
| 14 | D | ADDITIN RC 7135²⁾ | 139 |
| 15 | A | LOWINOX 44 S 36³⁾ | 163 |
| 16 | B | Phenothiazin | 149 |
| 17 | C | IRGANOX PS 802⁴⁾ | 142 |
| 18 | D | ADDITIN RC 7115⁵⁾ | 164 |
| 19 | A | ADDITIN RC 7115⁶⁾ | 148 |
| 20 | A | Phenothiazin | 142 |

| | | | |
|---|---|---|---|
| ¹⁾ Polymercharakteristik (Produkte lagen als Na-Salz vor): A: zu 50Mol-% mit Methylpolyethylenglykol-1 100 teilverestertes 1 : 1 -Copolymer aus Styrol und Maleinsäureanhydrid (Mₙ = 19 000 g/Mol) B: 1 : 1 - Copolymer aus Methylpolyethylenglykol-1 100-monovinylether und Maleinsäureanhydrid (Mn = 23 000 g/Mol) C: 1 : 1 - Copolymer aus Allylpolyethylenglykol-1 100 und Maleinsäureanhydrid (Mₙ = 13 000 g/Mol) D: zu 50 Mol-% teilverestertes Pfropfcopolymer aus Methylpolyethylenglykol-500 und Maleinsäureanhydrid (Molverhältnis 1 : 1,8) | | | |
| ²⁾ styrolisiertes Diphenylamin (Rhein Chemie) | | | |
| ³⁾ vgl. Tabelle 1 | | | |
| ⁴⁾ vgl. Tabelle 1 | | | |
| ⁵⁾ vgl. Tabelle 1 | | | |
| ⁶⁾ zusätzlicher Einsatz von 0,26 % (Gewicht bzgl. polymerer Feststoff) Taurin-Na-Salz | | | |

Ohne Zusatz von Stabilisatoren wurden für die Polymere A bis D folgende Ergebnisse erhalten (Tabelle 3):

**Tabelle 3:**

| **Beispiel** | **Polymer**^{**1)**} | **maximale Probentemperatur (°C) (24h-Lagerung bei 140°C)** |
|---|---|---|
| Vergleich 4 | A | 416 |
| Vergleich 5 | B | 458 |
| Vergleich 6 | C | 452 |
| Vergleich 7 | D | 469 |

| | | |
|---|---|---|
| ¹⁾ Polymercharakteristik: vgl. Tabelle 2 | | |

## Patentansprüche

1. Stabilisierte, wasserlösliche Polymerpulver auf Basis von Polyoxyalkylenglykol-Carboxylaien,
**dadurch gekennzeichnet,**
**daß** sie eine für die Stabilisierung ausreichende Menge eines Stabilisators ausgewählt aus der Gruppe Phenole, Amine, Phosphite, Thioether sowie Thiosäuren enthalten, und durch Zusetzen des Stabilisators in flüssiger oder gelöster Form zur wässrigen Polymerlösung vor deren Überführung in die Pulverform erhältlich sind.

2. Polymerpulver nach Anspruch 1,
**dadurch gekennzeichnet,**
**daß** die Polymere aus Monomeren auf Basis von ungesättigten Carbonsäuren bzw. deren Derivaten und Oxylalkylenglykolalkenylethern aufgebaut sind.

3. Polymerpulver nach Anspruch 1,
**dadurch gekennzeichnet,**
**daß** die Polymere eine ungesättigte Carbonsäure als Hauptkette und über Estergruppen gebundene Polyalkylenoxid-Seitenketten enthalten.

4. Polymerpulver nach einem der Ansprüche 1 bis 3,
**dadurch gekennzeichnet,**
**daß** die Polymere weitere Monomere auf Vinyl- und/oder Acrylatbasis enthalten.

5. Polymerpulver nach einem der Ansprüche 1 bis 4,
**dadurch gekennzeichnet,**
**daß** die Menge des Stabilisators 0,01 bis 10 Gew.-% und insbesondere 0,1 bis 1 Gew.-% bezogen auf das Polymerpulver beträgt.

6. Polymerpulver nach einem der Ansprüche 1 bis 5,
**dadurch gekennzeichnet,**
**daß** der Stabilisator ein alkyliertes Monophenol mit einem oder mehreren Alkylresten von 1 bis 18 C-Atomen, ein alkyliertes Hydrochinon mit einem oder mehreren Alkylresten von 1 bis 1 8 C-Atomen, ein Alkyliden-Bisphenol mit einem C₁₋₄- Alkylidenrest und/oder ein sterisch gehindertes Mehrkernphenol, eine phenolische Benzylverbindung, eine Phenol-Thiodiphenylether-Verbindung, ein Acylaminophenol, einen Ester von β-(3,5-Di-tert-butyl-4-hydroxyphenol)-propionsäure oder β-(5-tert-Butyl-4-hydroxy-3-methylphenyl)-propionsäure, ein Amid von β-(3,5-Di-tert-butyl-4-hydroxyphenyl)-propionsäure, ein sekundäres oder tertiäres Amin mit aliphatischen, araliphatischen, aromatischen und/oder cyclischen Resten oder einen N-Heterocyclus, wobei der N-Heterocyclus, insbesondere aus ggf. substituierten Phenothiazinen, Benzothiazinen und/oder Chinolinen ausgewählt ist, ein Phosphit mit aliphatischen, araliphatischen und/oder aromatischen Resten, einen Ester von Thiodiessigsäure und/oder Thiodipropionsäure oder eine Thiosäure, ausgewählt aus der Gruppe Dithiocarbaminsäure, Dithiophosphorsäure und/oder deren Salzen, umfaßt.

7. Polymerpulver nach einem der Ansprüche 1 bis 6,
**dadurch gekennzeichnet,**
**daß** sie eine Teilchengröße von 10 bis 100 µm aufweisen.

8. Polymerpulver nach einem der Ansprüche 1 bis 7,
**dadurch gekennzeichnet,**
**daß** sie zusätzlich bis zu 5 Gew.-% einer wasserlöslichen Aminosulfonsäure-Verbindung enthalten.

9. Polymerpulver nach Anspruch 8,
**dadurch gekennzeichnet,**
**daß** die Aminosulfonsäure-Verbindung aus Amidosulfonsäure und/oder Taurin in Form der freien Säure oder als Salz ausgewählt ist.

10. Polymerpulver nach einem der Ansprüche 1 bis 9,
**dadurch gekennzeichnet,**
**daß** bei Erwärmung einer Probe des Pulvers auf 140EC für 24 h die Temperatur im Inneren der Probe 200EC nicht überschreitet.

11. Verfahren zur Herstellung der Polymerpulver nach einem der Ansprüche 1 bis 10,
**dadurch gekennzeichnet,**
**daß** man
(a) einen Stabilisator ausgewählt aus der Gruppe Phenole, Amine, Phosphite, Thioether sowie Thiosäuren in einer für die Stabilisierung ausreichenden Menge in flüssiger oder gelöster Form einer wässrigen Lösung eines Polymers auf Basis von Polyoxyalkylenglykol-Carboxylaten zur Bildung einer Mikroemulsion zusetzt und anschließend
(b) das Polymer durch Entfernung der flüssigen Phase in die Pulverform überführt.

12. Verfahren nach Anspruch 11,
**dadurch gekennzeichnet,**
**daß** man die wässrige Polymerlösung vor der Überführung in die Pulverform auf einen pH-Wert von 6 bis 10, vorzugsweise 7 bis 9, einstellt.

13. Verfahren nach einem der Ansprüche 11 und 12,
**dadurch gekennzeichnet,**
**daß** die wässrige Polymerlösung einen Feststoffgehalt von 10 bis 50 Gew.-% aufweist.

14. Verfahren nach einem der Ansprüche 11 bis 13,
**dadurch gekennzeichnet,**
**daß** die Entfernung der flüssigen Phase durch Trocknung, insbesondere Sprühtrocknung, erfolgt.

## Claims

1. A stabilised, water-soluble polymer powder based on polyoxyalkylene-glycol carboxylates,
**wherein**
the powder comprises a stabiliser selected from the group consisting of phenols, amines, phosphites, thioethers, and also thioacids, in an amount adequate for stabilisation, and said powder is obtainable by adding the stabiliser in liquid or dissolved form to the aqueous polymer solution prior to its conversion into the powder form.

2. The polymer powder as in claim 1,
**wherein**
the polymers have been built up from monomers based on unsaturated carboxylic acids, and, respectively, derivatives of these and from oxyalkylene glycol alkenyl ethers.

3. The polymer powder as claimed in claim 1,
**wherein**
the polymers contain an unsaturated carboxylic acid as main chain and polyalkylene oxide side chains bonded via ester groups.

4. The polymer powder as claimed in any of claims 1 to 3,
**wherein**
the polymers contain other vinyl- and/or acrylate-based monomers.

5. The polymer powder as claimed in any of claims 1 to 4,
**wherein**
the amount of stabiliser is from 0.01 to 10% by weight and in particular from 0.01 to 1% by weight, based on the polymer powder.

6. The polymer powder as claimed in any of claims 1 to 5,
**wherein**
the stabiliser comprises an alkylated monophenol having one or more alkyl residues of from 1 to 18 carbon atoms, an alkylated hydroquinone having one or more alkyl residues of from 1 to 18 carbon atoms, an alkylidenebisphenol having a C₁-C₄-alkylidene residue and/or a sterically hindered polynuclear phenol, a phenolic benzyl compound, a phenol/thiodiphenyl ether compound, an acylaminophenol, an ester of β-(3,5-di-tert-butyl-4-hydroxyphenol) propionic acid or β-(5-tert-butyl-4-hydroxy-3-methylphenyl) propionic acid, an amide of β-(3,5-di-tert-butyl-4-hydroxyphenyl) propionic acid, a secondary or tertiary amine having aliphatic, araliphatic, aromatic and/or cyclic residues, or comprises an N-heterocycle,
**wherein**
the N-heterocycle has been selected from substituted or unsubstituted phenothiazines, benzothiazines and/or quinolines,
a phosphite having aliphatic, araliphatic and/or aromatic residues, an ester of thiodiacetic acid and/or thiodipropionic acid or a thioacid, selected from the group consisting of dithiocarbamic acid, dithiophosphoric acid and/or salts thereof.

7. The polymer powder as claimed in any of claims 1 to 6,
**wherein**
the particle size of the powder is from 10 to 100 µm.

8. The polymer powder as claimed in any of claims 1 to 7,
**wherein**
the powder also comprises up to 5% by weight of a water-soluble aminosulfonic acid compound.

9. The polymer powder as claimed in claim 8,
**wherein**
the aminosulfonic acid compound has been selected from amidosulfonic acid and/or taurine in the form of the free acid or as salt.

10. The polymer powder as claimed in any of claims 1 to 9,
**wherein**
when a specimen of the powder is heated at 140°C for 24 h, the temperature in the interior of the specimen does not exceed 200°C.

11. A process for preparing the polymer powder as claimed in any of claims 1 to 10,
which comprises
(a) adding a stabiliser selected from the group consisting of phenols, amines, phosphites, thioethers, and also thioacids, in an amount adequate for stabilisation, in liquid or dissolved form, to an aqueous solution of a polymer based on polyoxyalkylene glycol carboxylates, to form a microemulsion, and then
(b) converting the polymer into the powder form by removing the liquid phase.

12. The process as claimed in claim 11,
**wherein**
the pH of the aqueous polymer solution is set to 6-10, preferably 7-9, prior to conversion into the powder form.

13. The process as claimed in any of claims 11 and 12,
**wherein**
the aqueous polymer solution has a solids content of from 10 to 50% by weight.

14. The process as claimed in any of claims of 11 to 13,
**wherein**
the liquid phase is removed by drying, in particular spray drying.

## Revendications

1. Poudres de polymères hydrosolubles stabilisés à base de carboxylates de polyoxyalkylène glycols, **caractérisées en ce que** qu'elles contiennent une quantité suffisante pour la stabilisation, d'un agent stabilisant choisi dans le groupe des phénols, des amines, des phosphites, des thioéthers ainsi que des thioacides et **en ce qu'**elles peuvent être obtenues par l'ajout de l'agent stabilisant sous forme liquide ou dissoute à la solution aqueuse de polymère avant leur conversion sous forme de poudre.

2. Poudres de polymères selon la revendication 1, **caractérisées en ce que** les polymères sont produits à partir de monomères à base d'acides carboxyliques insaturés ou de dérivés de ceux-ci et d'éthers alcényliques d'oxyalkylène glycols.

3. Poudres de polymères selon la revendication 1, **caractérisées en ce que** les polymères contiennent un acide carboxylique insaturé en tant que chaîne principale et des chaînes latérales polyoxydes d'alkylènes liées par l'intermédiaire de groupes esters.

4. Poudres de polymères selon l'une des revendications 1 à 3, **caractérisées en ce que** les polymères contiennent d'autres monomères à base de vinyle et/ou d'acrylate.

5. Poudres de polymères selon l'une des revendications 1 à 4, **caractérisées en ce que** la quantité de l'agent stabilisant est de 0,01 à 10% en poids et notamment de 0,1 à 1% en poids, ramenée à la poudre de polymère.

6. Poudres de polymères selon l'une des revendications 1 à 5, **caractérisées en ce que** l'agent stabilisant comprend un monophénol alkylé avec un ou plusieurs résidus alkyles de 1 à 18 atomes de carbone, une hydroquinone alkylée avec un ou plusieurs résidus alkyles de 1 à 18 atomes de carbone, un alkylidène-bisphénol avec un résidu alkylidène en C₁ à C₄ et/ou un phénol polynucléaire à encombrement stérique, un composé de benzyle phénolique, un composé thiodiphényléther de phénol, un acylaminophénol, un ester de l'acide β-(3,5-di-*tert*-butyl-4-hydroxyphénol)propionique ou de l'acide β-(5-*tert*-butyl-3-méthylphényl)propionique, un amide de l'acide β-(3,5-di-*tert*-butyl-4-hydroxyphényl)propionique, une amine secondaire ou tertiaire avec des résidus aliphatiques, araliphatiques, aromatiques et/ou cycliques ou un N-hétérocycle, le N-hétérocycle étant choisi notamment parmi des phénothiazines, benzothiazines et/ou quinoléines éventuellement substituées, un phosphite avec des résidus aliphatiques, araliphatiques et/ou aromatiques, un ester de l'acide thiodiacétique et/ou de l'acide thiodipropionique, ou un thioacide choisi dans le groupe de l'acide dithiocarbamique, l'acide dithiophosphorique et/ou leurs sels.

7. Poudres de polymères selon l'une des revendications 1 à 6, **caractérisées en ce qu'**elles présentent une taille de particules de 10 à 100 µm.

8. Poudres de polymères selon l'une des revendications 1 à 7, **caractérisées en ce qu'**elles contiennent en plus jusqu'à 5% en poids d'un composé d'acide aminosulfonique soluble dans l'eau.

9. Poudres de polymères selon la revendication 8, **caractérisées en ce que** le composé d'acide aminosulfonique est choisi parmi l'acide amidosulfonique et/ou la taurine sous la forme des acides libres ou sous forme de sel.

10. Poudres de polymères selon l'une des revendications 1 à 9, **caractérisées en ce que**, lorsqu'un échantillon de la poudre est chauffé à 140°C pendant 24 heures, la température à l'intérieur de l'échantillon ne dépasse pas 200°C.

11. Procédé de préparation des poudres de polymères selon l'une des revendications 1 à 10, **caractérisé en ce que**
(a) on ajoute un agent stabilisant, choisi dans le groupe des phénols, des amines, des phosphites, des thioéthers ainsi que des thioacides, en une quantité suffisante pour la stabilisation, sous forme liquide ou dissoute, à une solution aqueuse d'un polymère à base de carboxylates de polyoxyalkylèneglycols afin de former une microémulsion, et ensuite
(b) on convertit le polymère sous forme de poudre en éliminant la phase liquide.

12. Procédé selon la revendication 11, **caractérisé en ce que**, avant la conversion sous forme de poudre, on ajuste la solution aqueuse de polymère à un pH de 6 à 10, de préférence de 7 à 9.

13. Procédé selon l'une des revendications 11 et 12, **caractérisé en ce que** la solution aqueuse de polymère présente une teneur en solides de 10 à 50% en poids.

14. Procédé selon l'une des revendications 11 à 13, **caractérisé en ce que** l'enlèvement de la phase liquide se fait par séchage, notamment un séchage par pulvérisation.
